# EUROPÄISCHE PATENTSCHRIFT

(11) **EP 2 067 237 B1**
(45) Veröffentlichungstag und Bekanntmachung des Hinweises auf die Patenterteilung: **17.11.2010**
(21) Anmeldenummer: 07820248.8
(22) Anmeldetag: 17.09.2007
(51) Int. Cl.: H02K 1/14, H02K 3/04, H02K 3/28, H02K 3/52

(54) **SYNCHRONMASCHINE**
SYNCHRONOUS MACHINE
MACHINE SYNCHRONE

(30) Priorität: 18.09.2006 DE 102006043673
(43) Veröffentlichungstag der Anmeldung: 10.06.2009
(73) Patentinhaber: Robert Bosch GmbH, 70442 Stuttgart (DE)
(72) Erfinder: BABAJANYAN, Artem, 76532 Baden-Baden (DE); KELLETER, Arndt, 71636 Ludwigsburg (DE); REUTLINGER, Kurt, 70174 Stuttgart (DE)
(86) Internationale Anmeldenummer: PCT/EP2007/059775
(87) Internationale Veröffentlichungsnummer: WO 2008/034792

(56) Entgegenhaltungen:
- EP-A- 1 239 568
- EP-A- 1 562 276
- WO-A-00/69047
- WO-A-2006/029969

## Beschreibung

### Stand der Technik

Die Erfindung geht aus von einer Synchronmaschine, insbesondere einem elektronisch kommutierbaren Gleichstrommotor, nach der Gattung des unabhängigen Anspruchs. Eine derartige Maschine ist aus der DE 101 34 123 A bekannt. Diese Druckschrift zeigt und beschreibt eine permanenterregte Synchronmaschine mit einem Stator, dessen Blechpaket über einem Joch eine Anzahl von Wickelzähnen aufweist, von denen nur jeder zweite eine elektrische Wicklung trägt. Die dazwischen liegenden Zähne bleiben unbewickelt. Die Wicklungen sind einzelnen Strängen zugeordnet und als Drehstrommaschine verschaltet, wobei der Stator drei Stränge aufweist, die jeweils um 120° phasenversetzt mit Strom beaufschlagt werden. Permanenterregte Synchronmaschinen, bei denen nur jeder zweite Zahn bewickelt ist, sind z.B. Gegenstand des Dokuments EP 1 562 276, während die Maschine in WO 2006029969 zudem als Torque-Motor ausgeführt ist.

Für eine derartige Synchronmaschine ist es weiterhin aus dem Lehrbuch von E. Arnold, die Wechselstromtechnik, 4. Band, Springer Verlag Berlin, 1904, S. 177 ff. bekannt, den die Wicklung tragenden Kern des Stators rund auszubilden, wobei ebenfalls nur jeder zweite Kern bewickelt ist. Die Magnetkerne sind bei dieser Ausführung mit dem Joch verschraubt und massiv, sodass sie den induzierten Wirbelströmen nur einen geringen elektrischen Widerstand entgegensetzen und daher für eine Maschine der gattungsgemäßen Art mit einer Wechselstromwicklung ungeeignet sind. Der modulare Aufbau von Ständerblechpaketen wird auch in den Dokumenten EP1239568 und WO 00/69047 behandelt.

### Offenbarung der Erfindung

Die erfindungsgemäße.Synchronmaschine mit den Merkmalen des unabhängigen Anspruchs hat gegenüber dem geschilderten Stand der Technik den Vorteil, dass die Ausnutzung der Maschine deutlich erhöht werden kann, insbesondere durch eine bessere Ausnutzung des vorhandenen Bauraums für die Flussführung, wobei sich gleichzeitig eine besonders einfache Spulengeometrie der Wicklung mit reduziertem elektrischem Widerstand und eine höhere Kupferfüllung im Nutbereich ergibt.

Durch die in den abhängigen Ansprüchen aufgeführten Maßnahmen sind vorteilhafte Weiterbildungen und Verbesserungen der im unabhängigen Anspruch angegebenen Maschine möglich. Besonders zweckmäßig ist es hierbei, wenn die Hauptzähne und die Folgezähne so gestaltet sind, dass die Hauptzähne zusammen mit den Folgezähnen kreisförmige oder kreissektorförmige Nuten bilden, wobei die Folgezähne in Umfangsrichtung der Maschine den Raum zwischen zwei bewickelten Hauptzähnen vorzugsweise vollständig ausfüllen. Wegen des sich im Mittelbereich der Folgezähne hierbei ergebenden reduzierten Eisenquerschnitts ist es vorteilhaft, wenn die Folgezähne eine größere axiale Länge aufweisen als die Hauptzähne, sodass der magnetische Widerstand am Luftspalt zwischen Stator und Rotor an den Hauptzähnen und den Folgezähnen im Wesentlichen ausgeglichen ist.

Weiterhin ist es zweckmäßig, wenn die Hauptzähne und/oder Folgezähne Zahnüberhänge besitzen, welche vergrößerte Zahnköpfe am Luftspalt der Maschine bilden, wobei vorzugsweise die Zahnköpfe der Hauptzähne und der Folgezähne am Luftspalt den gleichen Querschnitt aufweisen.

Hinsichtlich der Fertigung des Stators der Maschine hat es sich als besonders vorteilhaft erwiesen, wenn die Hauptzähne und/oder die Folgezähne und/oder das sie tragende Joch aus einem Eisenpulververbundwerkstoff, vorzugsweise aus SMC(Soft-Magnetic-Composit)-Werkstoff bestehen. Bei dieser Ausführung wird oberflächlich isoliertes, weichmagnetisches Eisenpulver zusammen mit einem Binder in Formen gepresst oder gespritzt, so dass sich für die Gestaltung der Statorgeometrie vorteilhafte Möglichkeiten ergeben, wodurch die herkömmlichen Schwierigkeiten beim Stanzen von unterschiedlichen Blechgeometrien für geschichtete Statorpakete mit gekrümmtem Nutverlauf nicht auftreten. Bei SMC-Werkstoffen wird der Binder nach der Formgebung ausgebrannt.

Andererseits können für den erfindungsgemäßen Aufbau des Stators der Maschine auch einzelne, elektrisch isolierte, separat gefertigte Bleche verwendet werden, wenn diese durch geeignete Herstellungsverfahren, beispielsweise durch ein automatisiertes Laser-Schneidverfahren, gefertigt werden, wobei die unterschiedliche Geometrie der Einzelbleche durch eine automatisierte Steuerung eines Laser-Schneidwerkzeuges mit vertretbarem Aufwand realisierbar ist. Die vorteilhaften magnetischen und elektrischen Eigenschaften eines aus Blechen aufgebauten Stators können dann weiterhin genutzt werden können.

Als besonders vorteilhaft hat es sich erwiesen, wenn die Hauptzähne und/oder die Folgezähne und/oder die Zahnköpfe und/oder das Joch wenigstens teilweise getrennt gefertigt und anschließend miteinander verbunden werden. Hierbei ist es möglich, im Rahmen von geeigneten, grundsätzlich bekannten Verbindungstechniken wie Kleben, formschlüssigen oder kraftschlüssigen Verbindungen die einzelnen Elemente des Stators der Maschine aus unterschiedlichen Materialien herzustellen und hierbei ihre speziellen Eigenschaften zu nutzen, insbesondere die bessere magnetische Leitfähigkeit von Blechen und die leichtere dreidimensionale Formbarkeit von Eisenpulververbundwerkstoffen. Bei separat gefertigten Zähnen ist es auch bei Zähnen mit Zahnköpfen möglich, die Spulen vorzuwickeln und dann erst auf den Zahn aufzubringen. Dadurch lassen sich höhere Kupferfüllfaktoren erzielen.

### Kurze Beschreibung der Zeichnungen

Ausführungsbeispiele der Erfindung sind in den Zeichnungen dargestellt und in der nachfolgenden Beschreibung näher erläutert. Es zeigen
- Fig. 1: eine schematisierte Darstellung eines Schnittbildes einer Synchronmaschine mit einem eine Drehstromwicklung tragenden Stator in Folgezahnausführung und einem durch Permanentmagnete erregten, als Innenläufer ausgebildeten Rotor,
- Fig. 2: einen Schnitt durch einen Stator einer Synchronmaschine mit herkömmlichen, geraden Polen und Nuten,
- Fig. 3: einen Schnitt durch einen Stator entsprechend Fig. 2 mit Zahnüberhängen an den Zahnköpfen,
- Fig. 4: einen Schnitt durch einen erfindungsgemäß gestalteten Stator einer Synchronmaschine mit kreisförmigen Hauptzähnen und einer kreisförmigen Wicklung,
- Fig. 5: einen Schnitt durch einen erfindungsgemäß gestalteten Stator entsprechend Fig. 4, jedoch mit Zahnüberhängen an den Zahnköpfen, und
- Fig. 6a bis 6d: verschiedene Ausführungen von separat gefertigten und anschließend durch unterschiedliche Verbindungstechniken zusammengefügten Teilen des Stators einer erfindungsgemäß gestalteter Maschine im Schnitt.

### Ausführungsformen der Erfindung

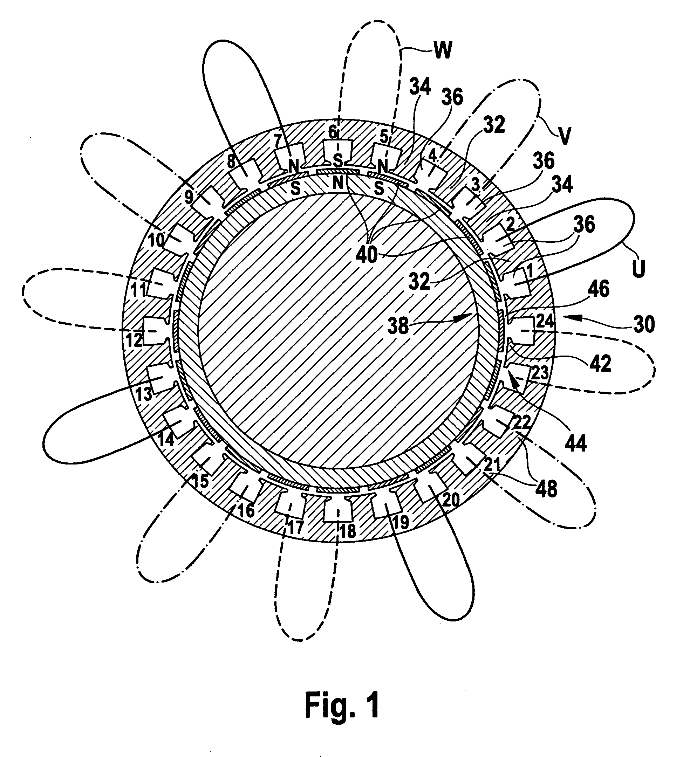

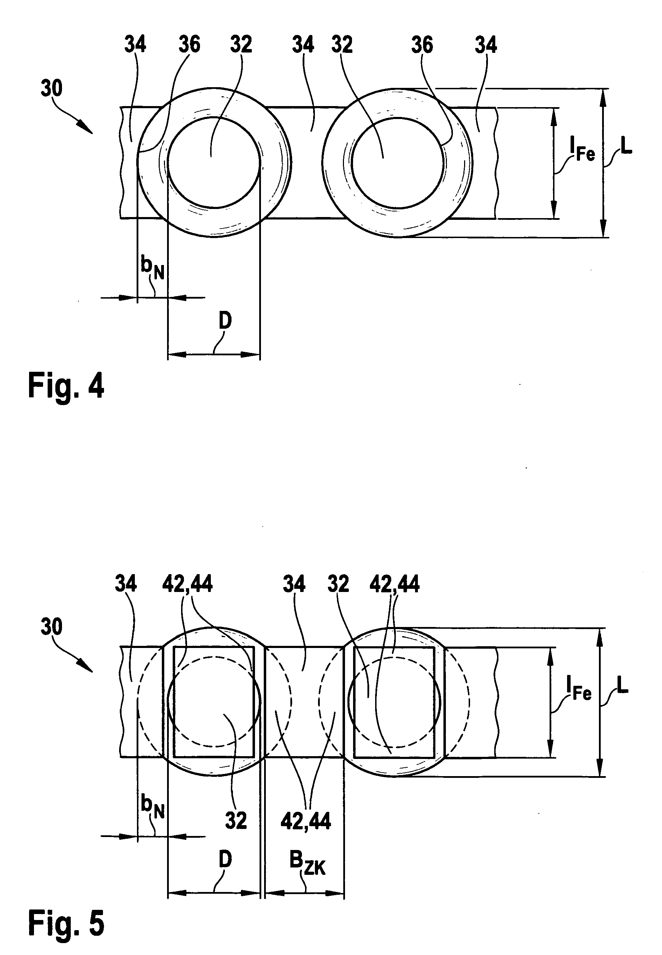

In Fig. 1 ist eine Synchronmaschine der erfindungsgemäßen Art schematisch dargestellt. Sie besitzt einen außen liegenden Stator 30 mit bewickelten Hauptzähnen 32, welche sich mit unbewickelten Folgezähnen 34 entlang des Umfangs abwechseln. Die einzelnen Wicklungen sind zu einer Drehstromwicklung mit den Phasen U,V,W, verschaltet und in dieser Folge entlang des Statorumfangs verteilt. Die Nuten des Stators sind mit 36 bezeichnet und ebenso wie die spezielle Gestaltung der Hauptzähne und der Folgezähne in den später erörterten Fig. 4 bis 6 detailliert beschrieben.

Die dargestellte Synchronmaschine weist einen als Innenläufer ausgebildeten Rotor 38 auf, welcher entlang seines Außenumfangs radial und in Ihrer Magnetisierungsrichtung wechselnd magnetisierte Permanentmagnete 40 aufweist. Im Ausführungsbeispiel sind die Permanentmagnete 40 als aufgeklebte Oberflächenmagnete ausgebildet, wobei einem Stator mit 24 Nuten und den Wicklungen U,V,W ein Rotor mit 20 Permanentmagnetpolen gegenübersteht. Zwischen den Permanentmagneten 40 und den Statorzähnen 32,34 liegt ein Luftspalt 42.

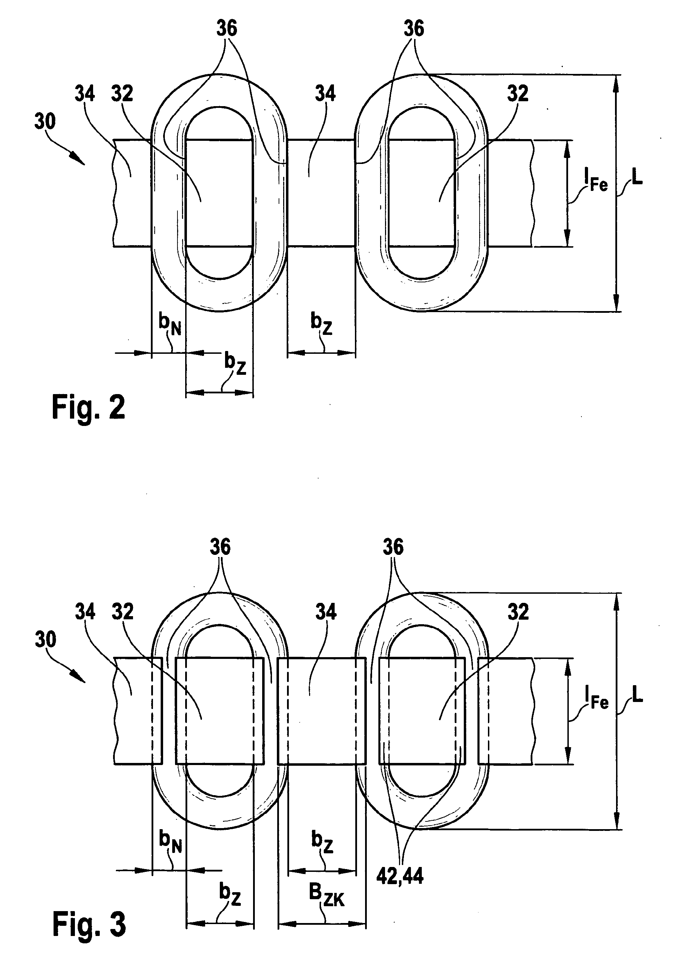

Die erfindungsgemäße Gestaltung der Statorzähne 32,34 und der Nuten 36 ist anhand der Figuren 2 bis 6 näher erläutert, wobei die Figuren 2 und 3 herkömmliche Bauformen zeigen, während die Figuren 4 bis 6 erfindungsgemäß gestaltete Hauptzähne 32 und Folgezähne 34 aufweisen. Da die Synchronmaschine eine Mehrphasenwicklung U,V,W trägt ist es erforderlich, dass zur Unterdrückung von Wirbelströmen sowohl die Hauptzähne 32 als auch die Folgezähne 34 aus einem weichmagnetischem Material mit geringer elektrischer Leitfähigkeit bestehen. Üblicherweise werden daher zum Aufbau des Stators Pakete von oberflächlich isolierten Blechen aus magnetisch gut leitfähigem Material verwendet. Diese Bleche werden aus Blechtafeln ausgestanzt und zu Paketen gestapelt, wobei alle Bleche eines solchen Paketes mit demselben Schnitt hergestellt sind, weshalb sich die in axialer Richtung verlaufenden Nuten 36 nur geradlinig ausrichten lassen. Die Querschnittsflächen der Statorzähne 32 und 34, die vom magnetischen Fluss genutzt werden, ergeben sich dann als Rechtecke, wie dies aus den Figuren 2 und 3 ersichtlich ist. Hierbei zeigt die Fig. 2 eine Ausbildung des Stators 30 mit offenen Nuten 36, während in Fig. 3 die Nuten 36 im Bereich der Zahnköpfe 42 durch Zahnüberhänge 44 teilweise geschlossen sind.

Die Figuren 4 und 5 zeigen erfindungsgemäße Gestaltungen der Hauptzähne 32 und der Folgezähne 34 des Stators 30, wobei die Anordnung gemäß Fig. 4 wiederum offene Nuten 36 aufweist, während die Nuten in der Anordnung gemäß Fig.5 durch Zahnüberhänge 44 im Bereich der Zahnköpfe 42 teilweise geschlossen sind. Die Hauptzähne 32 und die Nuten 36 besitzen einen im Wesentlichen kreisförmigen Querschnitt, während der Querschnitt der Folgezähne 34 etwa die Form eines Doppelkegels mit den kreisförmigen Nuträndern angepassten Oberflächen aufweist. Die Folgezähne 34 füllen in Umfangsrichtung der Maschine den Raum zwischen jeweils zwei bewickelten Hauptzähnen 32, beziehungsweise zwischen den außen liegenden Nuträndern, im Wesentlichen vollständig aus. Die Folgezähne 34 besitzen eine größere axiale Länge als die Hauptzähne 32, wobei durch die Zahnüberhänge 44 bei der Anordnung gemäß Fig. 5 am Luftspalt 46 gleich große Zahnköpfe 42 an den Hauptzähnen 32 und den Folgezähnen 34 ausgebildet werden.

Wie vorstehend bereits erörtert, bereitet der Aufbau des Stators 30 aus geschichteten Blechen Schwierigkeiten bei gekrümmtem Verlauf der Nuten 36, da die einzelnen Bleche des Paketes dann unterschiedliche Blechschnitte aufweisen müssen. Der Aufbau des Stators 30 aus einem solchen Blechpaket ist jedoch möglich, wenn numerisch gesteuerte Fertigungs- und Montagevorrichtungen eingesetzt werden zum Schneiden der Einzelbleche und zur folgerichtigen Schichtung derselben. Für die Herstellung der Blechschnitte eignen sich insbesondere mit Laserstrahlung arbeitende Schneidwerkzeuge, da bei derartigen Maschinen die Führung des Laserstrahls mit relativ einfachen elektronischen Mitteln gesteuert werden kann.

Eine andere vorteilhafte Möglichkeit zur Herstellung eines Stators 30 mit runden Hauptzähnen 32 und Nuten 36 sowie in der Gestaltung angepassten Folgezähnen 34 entsprechend den Darstellungen in den Figuren 4 und 5 besteht darin, als Material für die Herstellung des Stators 30 einen Eisenpulververbundwerkstoff, insbesondere einen kunststoffgebundenen Eisenpulververbundwerkstoff oder einen SMC-Werkstoff (Soft-Magnetic-Composit-Werkstoff) zu verwenden. Diese neuen Materialien ermöglichen die freie Gestaltung der Hauptzähne 32 und der Folgezähne 34, indem oberflächlich isoliertes, magnetisches Eisenpulver in Formen gepresst oder gespritzt wird. Derartige Werkstoffe sind im Handel erhältlich und können entweder allein oder auch in Verbindung mit Blechen vorteilhaft für die vorgeschlagene Gestaltung der Statorzähne eingesetzt werden. Hierbei können die speziellen Eigenschaften der verschiedenen Werkstoffe individuell oder in Kombination miteinander genutzt werden, zum Beispiel die bessere Formbarkeit der Eisenpulververbundwerkstoffe bei der Herstellung besonderer Geometrien und die bessere magnetische Leitfähigkeit von Blechen, um eine Leistungssteigerung der Maschine zu erreichen.

Im Folgenden werden die Unterschiede zwischen einem herkömmlichen und einem erfindungsgemäßen Aufbau des Stators 30 der Maschine anhand einer Beispielrechnung bei vorgegebenem Bauraum für die Flussführung näher erläutert. Hierbei haben Maschinen mit einer Einzelzahnwicklung und insbesondere solche mit einer Folgezahnwicklung, bei der nur jeder zweite Zahn bewickelt ist, eine höhere Induktivität als Maschinen mit verteilter Wicklung. Derartige Maschinen eignen sich daher sehr gut für Antriebe, die mit hohen Drehzahlen durch Feldschwächung betrieben werden, wie dies zum Beispiel bei elektronisch kommutierbaren Gleichstrommaschinen der Fall ist. Besonders geeignet ist die erfindungsgemäße Gestaltung der Maschine auch für kurze Maschinen mit großem Durchmesser und hoher Polzahl, wie dies beispielsweise bei sogenannten Torque-Motoren der Fall ist, welche langsam laufen und hierbei hohe Drehmomente abgeben.

In den Figuren 2 bis 5 sind jeweils gleiche Teile mit gleichen Bezeichnungen versehen. Hierbei bedeuten:
b_{N} = Nutbreite
b_{z} = Zahnbreite
1_{Fe} = Eisenlänge
L = Gesamtlänge
D = Durchmesser des Hauptzahns
B_{ZK} = Zahnkopfbreite

Beim Vergleich des Statoraufbaus entsprechend den Figuren 2 und 3 mit der erfindungsgemäßen Gestaltung entsprechend den Figuren 4 und 5 wird für die herkömmliche Gestaltung der sogenannte quadratische Entwurf zugrundegelegt, welcher bei linear verlaufender Nut 36 und rechteckigem Zahnquerschnitt die optimale Spulenform und die beste Maschinenausnutzung liefert. Hierbei werden der Magnetkreis und der elektrische Kreis soweit möglich einem Quadrat angenähert, wobei der elektrische Kreis durch die Form der Kupferwicklung bestimmt ist, welche dann bei minimalem Umfang einen möglichst großen Flussquerschnitt aufweist. Die Länge des Wickelkopfes soll gleich der Länge des Kupfers in der Nut 36 und damit gleich der Eisenlänge l_{Fe} sein, um einen minimalen ohmschen Widerstand der Wicklung und einen maximalen Magnetfluss sicher zu stellen. Unter Berücksichtigung der Spulenbreite b_{N} lässt sich hieraus das optimale Seitenverhältnis der Zähne 32 und 34 des Stators 30 in den Figuren 2 und 3 errechnen, wobei der magnetische Widerstand im Luftspalt 46 durch die Zahnüberhänge 44 im Bereich der Zahnköpfe 42 gemäß Fig. 3 noch weiter reduziert wird.

Für einen direkten Vergleich der Gestaltungen gemäß den Figuren 2 und 4 soll folgendes Ausführungsbeispiel betrachtet werden:
Zahnbreite b_{z} = 20 mm (Fig.2-5)
Nutbreite b_{N} = 10 mm (Fig.2-5)
Nutteilung τ_{N} = b_{z} + b_{N} = 30 mm (Fig.2-5)
Eisenlänge l_{Fe} = 31 mm (Fig. 2,3)
Gesamtlänge L = 71 mm (Fig. 2,3)

Hieraus errechnet sich ein Zahnquerschnitt A = b_{z} l_{Fe} von 620 mm² und eine mittlere Drahtlänge l_{Cu} = 2·l_{Fe} + π·τ von 156 mm.

Vergleicht man diese Werte mit einer Kreisspulenanordnung gemäß Fig. 4 und Fig. 5 bei gleicher Nutbreite b_{N}, gleicher Nutteilung τ_{N} und gleichem Zahnquerschnitt A des Hauptzahnes, so errechnet sich der Durchmesser D des Hauptzahnes in Fig. 4 zu 28 mm, woraus sich eine mittlere Drahtlänge von 119 mm für die Wicklungen U,V,W ergibt. Hierdurch reduzieren sich bei gleichem Drahtquerschnitt die benötigte Kupfermenge und die ohmschen Verluste um 24%, wobei runde Spulen zusätzlich gleichmäßiger gewickelt werden können als rechteckige Spulen, da der Drahtzug beim Wickeln konstant bleibt und es nicht zu einem Auffächern der Drähte im Bereich gerader Wickelabschnitte kommt. Hierdurch kann zusätzlich der Füllfaktor in der Nut verbessert werden. Durch die Reduzierung der Gesamtlänge L der Spulen von 71 mm bei den Figuren 2 und 3 auf 48 mm bei den Figuren 4 und 5 laden die Wickelköpfe der Spulen weniger weit aus und verschwinden fast vollständig in der Blechpaketlänge l_{Fe}.

Werden Zahnköpfe 42 eingesetzt, wie dies in den Figuren 3 und 5 dargestellt ist, so erhöht sich die aktive Maschinenlänge l_{Fe} der Anordnung gemäß Fig.5 auf 40 mm ohne Erhöhung der Gesamtlänge L. Die Eisenlänge l_{Fe} der Folgezähne 34 in Fig. 4. und 5 gilt dann auch für die Hauptzähne 32 in Fig.5, so dass bei gleichem Luftspaltfluss schwächere Permanentmagnete 40 im Rotor 38 eingesetzt werden können oder bei gleichen Magneten der Luftspaltfluss erhöht wird. Außerdem kann bei gleichem Fluss die Höhe des Statorjochs 48 reduziert werden um den Faktor der Verlängerung des Eisenpaketes entsprechend l_{Fe}, wodurch sich der Außendurchmesser der Maschine reduzieren lässt. Schließlich erhält man noch durch kreisförmig verlaufende Nuten hinsichtlich der Rastmomente der Maschine den gleichen Effekt wie durch eine Nutschrägung bei linear verlaufenden Nuten herkömmlicher Bauweise, wodurch die Momentenschwankungen im Betrieb reduziert werden.

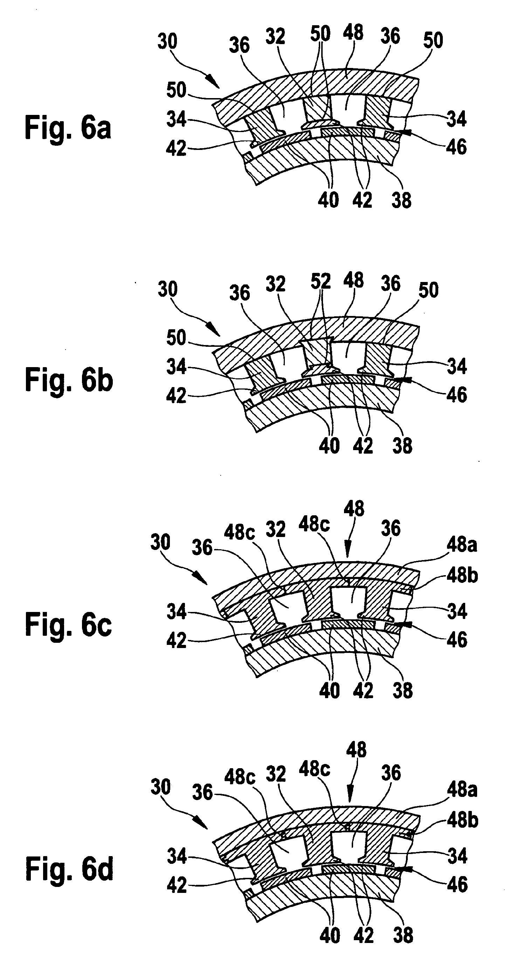

Die Figuren 6a bis 6d zeigen verschiedene Möglichkeiten für den Aufbau des Stators 30 aus Einzelelementen des Jochs 48, der Hauptzähne 32, der Folgezähne 34 und der Zahnköpfe 42 sowie für deren Zusammenbau. Der Rotor 38 ist jeweils gleich gestaltet mit aufgeklebten Permanentmagneten 40.

In Fig. 6a besteht das Joch 48 aus einem Paket von ausgestanzten und geschichteten Blechen mit jeweils gleichem Blechschnitt. Die Hauptzähne 32 mit ihrem kreisförmigen Querschnitt sind aus Blechstreifen als Rolle gewickelt und die Zahnköpfe 42 aus gestanzten Blechen mit veränderlichem oder gleichbleibendem Querschnitt geschichtet. Lediglich die Folgezähne 34 sind aus Einsenpulververbundwerkstoff gepresst oder gespritzt wegen ihrer komplexen, aus den Figuren 4 und 5 ersichtlichen, in drei Achsen veränderlichen Geometrie, welche mit Blechschnitten schwierig herzustellen ist. Für das Joch 48, die Hauptzähne 32 und die Zahnköpfe 42 kann jedoch die bessere magnetische Leitfähigkeit von Blechen genützt werden. Die einzelnen Elemente sind jeweils an ihren Berührungsflächen 50 miteinander verklebt.

Bei der Anordnung gemäß Fig. 6b bestehen die einzelnen Elemente 32,34,42 und 48 jeweils aus dem gleichen Material wie bei dem Aufbau in Fig. 6a, jedoch ist hier eine formschlüssige Verbindung der Einzelteile durch Schwalbenschwänze 52 an den Hauptzähnen 32 und den Zahnköpfen 42 vorgesehen. Die korrespondierenden Stellen am Joch 48 und an den Hauptzähnen 32 weisen entsprechende Aussparungen auf, in welche die schwalbenschwanzförmigen Vorsprünge eingeschoben sind. Wahlweise können auch die Folgezähne 34 entsprechend den Hauptzähnen 32 gestaltet und auch hier statt einer Klebeverbindung 50 eine formschlüssige Verbindung vorgesehen werden.

Die Darstellungen in den Figuren 6c und 6d zeigen Ausführungsformen, bei denen das Joch 48 in radialer Richtung im Bereich 48a aus Blechschnitten geschichtet und im Bereich 48b aus Eisenpulververbundwerkstoff geformt ist. Hierbei ist jeweils ein Hauptzahn 32 oder ein Folgezahn 34 einteilig mit einem Jochabschnitt 48b entsprechend der Breite einer Polteilung aus Eisenpulververbundwerkstoff hergestellt. Die Verbindung des äußeren einteiligen Jochbogens 48a mit dem inneren Jochabschnitt 48b, dem Hauptzahn 32 oder dem Folgezahn 34 und dem Zahnkopf 42 erfolgt kraftschlüssig durch einen gewölbeartigen Zusammenbau. Die Stabilität des Zusammenbaus kann bei der Anordnung gemäß Fig. 6c noch erhöht werden durch einen zusätzlichen formschlüssigen Verbund an den Stoßstellen 48c und/oder durch Klebeverbindungen an den Stoßstellen und an den Berührungsflächen zwischen dem äußeren Teil 48a und dem inneren Teil 48b des Jochs 48.

## Patentansprüche

1. Synchronmaschine, insbesondere elektronisch kommutierbarer Gleichstrommotor, mit einer mehrphasigen Statorwicklung, vorzugsweise einer Drehstromwicklung (U,V,W), welche als Einzelzahnwicklung ausgebildet ist mit einer Wicklung auf jedem zweiten Zahn (32) und einem unbewickelten Folgezahn (34) zwischen jeweils zwei bewickelten Hauptzähnen (32), wobei sowohl die Hauptzähne (32) wie auch die Folgezähne (34) aus weichmagnetischem Material mit geringer elektrischer Leitfähigkeit bestehen, **dadurch gekennzeichnet, dass** die Hauptzähne (32) einen im Wesentlichen kreisförmigen Querschnitt aufweisen und eine kreisringförmige Wicklung (U,V,W) tragen und der Durchmesser (D) der Hauptzähne (32) kleiner ist als die Eisenlänge (I_{Fe}) des Blechpaketes.

2. Synchronmaschine nach Anspruch 1, **dadurch gekennzeichnet, dass** die Hauptzähne (32) zusammen mit den Folgezähnen (34) kreisförmige oder kreissektorförmige Nuten (36) ausbilden.

3. Synchronmaschine nach Anspruch 1 oder 2, **dadurch gekennzeichnet, dass** die Folgezähne (34) in Umfangsrichtung der Maschine den Raum zwischen zwei bewickelten Hauptzähnen (32) im Wesentlichen vollständig ausfüllen.

4. Synchronmaschine nach einem der vorhergehenden Ansprüche, **dadurch gekennzeichnet, dass** die Folgezähne (34) eine größere axiale Länge (l_{Fe}) aufweisen als die Hauptzähne (32).

5. Synchronmaschine nach einem der vorhergehenden Ansprüche, **dadurch gekennzeichnet, dass** die Hauptzähne (32) und/oder die Folgezähne (34) Zahnüberhänge (44) besitzen, welche am Luftspalt der Maschine Zahnköpfe (42) ausbilden.

6. Synchronmaschine nach Anspruch 5, **dadurch gekennzeichnet, dass** die Zahnköpfe (42) der Hauptzähne (32) und der Folgezähne (34) in axialer Richtung und/oder in Umfangrichtung der Maschine gleich groß sind.

7. Synchronmaschine nach einem der vorhergehenden Ansprüche, **dadurch gekennzeichnet, dass** die Hauptzähne (32) und/oder die Folgezähne (34) und/oder ein sie tragendes Joch (48) aus einem Eisenpulververbundwerkstoff bestehen.

8. Synchronmaschine nach Anspruch 7, **dadurch gekennzeichnet, dass** die Hauptzähne (32) und/oder die Folgezähne (34) und/oder das Joch (48) aus einem kunststoffgebundenen Eisenpulververbundwerkstoff oder aus SMC(Soft-Magnetic-Composit)-Werkstoff bestehen.

9. Synchronmaschine nach einem der Ansprüche 1 bis 6, **dadurch gekennzeichnet, dass** die Hauptzähne (32), und/oder die Folgezähne (34) und/oder das sie tragende Joch (48) aus einzelnen, elektrisch isolierten Blechen geschichtet sind.

10. Synchronmaschine nach einem der vorhergehenden Ansprüche, **dadurch gekennzeichnet, dass** die Hauptzähne (32) und/oder die Folgezähne (34) und/oder die Zahnköpfe (42) und/oder das Joch (48) wenigstens teilweise getrennt gefertigt und anschließend miteinander verbunden sind.

11. Synchronmaschine nach Anspruch 10, **dadurch gekennzeichnet, dass** die Hauptzähne (32) und/oder die Folgezähne (34) und/oder die Zahnköpfe (42) und/oder das Joch (48) miteinander verklebt (50) sind (Fig. 6a).

12. Synchronmaschine nach Anspruch 10, **dadurch gekennzeichnet, dass** die Hauptzähne (32) und/oder die Folgezähne (34) und/oder die Zahnköpfe (42) und/oder das Joch (48) formschlüssig, vorzugsweise durch Schwalbenschwänze (52), miteinander verbunden sind (Fig. 6b).

13. Synchronmaschine nach Anspruch 10, **dadurch gekennzeichnet, dass** die Hauptzähne (32) und/oder die Folgezähne (34) und/oder das Joch (48) nach einem Gewölbeprinzip (Fig. 6c), vorzugsweise nach einem formschlüssigen Gewölbeprinzip (Fig. 6d), miteinander verbunden sind.

14. Synchronmaschine nach einem der vorhergehenden Ansprüche, **dadurch gekennzeichnet, dass** die Hauptzähne (32) und/oder die Folgezähne (34) und/oder die Zahnköpfe (42) und/oder das Joch (48) aus unterschiedlichen weichmagnetischen Materialien oder aus einer Kombination von weichmagnetischen Materialien bestehen.

15. Synchronmaschine nach einem der vorhergehenden Ansprüche, **dadurch gekennzeichnet, dass** die Hauptzähne (32) aus einem Blechwickel gebildet sind und die Folgezähne (34) aus einem Eisenpulververbundwerkstoff, vorzugsweise aus SMC-Werkstoff bestehen.

16. Synchronmaschine nach einem der Ansprüche 1 bis 14, **dadurch gekennzeichnet, dass** die Hauptzähne (32) aus einem Einsenpulververbundwerkstoff, vorzugsweise aus SMC-Werkstoff, bestehen und die Folgezähne (34) zusammen mit dem Joch (48) aus Blechen ausgestanzt und geschichtet sind.

17. Synchronmaschine nach einem der Ansprüche 1 bis 14, **dadurch gekennzeichnet, dass** die Hauptzähne (32) und die Folgezähne (43) aus einem Einsenverbundwerkstoff, vorzugsweise aus SMC-Werkstoff bestehen, während die Zahnköpfe (42) und/oder das Joch (48) aus Blechen ausgetanzt und geschichtet sind.

18. Synchronmaschine nach einem der vorhergehenden Ansprüche, **gekennzeichnet durch** eine permanentmagnetische (40) Erregeranordnung.

19. Synchronmaschine nach einem der vorhergehenden Ansprüche, **dadurch gekennzeichnet, dass** die Maschine als Innenläufer (38) gestaltet ist mit einer Folgezahnanordnung (34) im außen liegenden Stator (30).

20. Synchronmaschine nach einem der vorhergehenden Ansprüche, **gekennzeichnet durch** die Ausbildung als Torque-Motor.

## Claims

1. Synchronous machine, in particular a direct-current motor which can be commutated electronically, having a polyphase stator winding, preferably a three-phase winding (U, V, W), which is in the form of a single-tooth winding with one winding on every second tooth (32) and an unwound following tooth (34) between in each case two wound main teeth (32), wherein both the main teeth (32) and the following teeth (34) are composed of soft-magnetic material of low electrical conductivity, **characterized in that** the main teeth (32) have an essentially circular cross section and are fitted with an annular winding (U, V, W), and the diameter (D) of the main teeth (32) is less than the iron length (I_{Fe}) of the laminated core.

2. Synchronous machine according to Claim 1, **characterized in that** the main teeth (32) together with the following teeth (34) form circular slots (36) or slots in the form of circle sectors.

3. Synchronous machine according to Claim 1 or 2, **characterized in that** the following teeth (34) essentially completely fill the space between two wound main teeth (32) in the circumferential direction of the machine.

4. Synchronous machine according to one of the preceding claims, **characterized in that** the following teeth (34) have a greater axial length (l_{Fe}) than the main teeth (32).

5. Synchronous machine according to one of the preceding claims, **characterized in that** the main teeth (32) and/or the following teeth (34) have tooth overhangs (44) which form tooth heads (42) on the air gap of the machine.

6. Synchronous machine according to Claim 5, **characterized in that** the tooth heads (42) of the main teeth (32) and of the following teeth (34) are of the same size in the axial direction and/or in the circumferential direction of the machine.

7. Synchronous machine according to one of the preceding claims, **characterized in that** the main teeth (32) and/or the following teeth (34) and/or a yoke (48) to which they are fitted are or is composed of an iron powder composite material.

8. Synchronous machine according to Claim 7, **characterized in that** the main teeth (32) and/or the following teeth (34) and/or the yoke (48) are/is composed of a plastic-bonded iron powder composite material or of SMC (soft magnetic composite) material.

9. Synchronous machine according to one of Claims 1 to 6, **characterized in that** the main teeth (32) and/or the following teeth (34) and/or the yoke (48) to which they are fitted are or is formed from layers of individual electrically insulated laminates.

10. Synchronous machine according to one of the preceding claims, **characterized in that** the main teeth (32) and/or the following teeth (34) and/or the tooth heads (42) and/or the yoke (48) are/is manufactured at least partially separated and are then joined to one another.

11. Synchronous machine according to Claim 10, **characterized in that** the main teeth (32) and/or the following teeth (34) and/or the tooth heads (42) and/or the yoke (48) are/is adhesively bonded (50) to one another (Figure 6a).

12. Synchronous machine according to Claim 10, **characterized in that** the main teeth (32) and/or the following teeth (34) and/or the tooth heads (42) and/or the yoke (48) are connected to one another in an interlocking manner, preferably by the use of dovetails (52) (Figure 6b).

13. Synchronous machine according to Claim 10, **characterized in that** the main teeth (32) and/or the following teeth (34) and/or the yoke (48) are connected to one another on the basis of a arch principle (Figure 6c), preferably on the basis of an interlocking arch principle (Figure 5d).

14. Synchronous machine according to one of the preceding claims, **characterized in that** the main teeth (32) and/or the following teeth (34) and/or the tooth heads (42) and/or the yoke (48) are/is composed of different soft-magnetic materials or of a combination of soft-magnetic materials.

15. Synchronous machine according to one of the preceding claims, **characterized in that** the main teeth (32) are formed from a wound laminate and the following teeth (34) are composed of an iron powder composite material, preferably SMC material.

16. Synchronous machine according to one of Claims 1 to 14, **characterized in that** the main teeth (32) are composed of an iron powder composite material, preferably SMC material, and the following teeth (34) are stamped out together with the yoke (48) from laminates, and are laminated.

17. Synchronous machine according to one of Claims 1 to 14, **characterized in that** the main teeth (32) and the following teeth (34) are composed of an iron composite material, preferably SMC material, while the tooth heads (42) and/or the yoke (48) are/is stamped out from laminates and/is laminated.

18. Synchronous machine according to one of the preceding claims, **characterized by** a permanent-magnet (40) field arrangement.

19. Synchronous machine according to one of the preceding claims, **characterized in that** the machine is in the form of an internal rotor (38) with a following tooth arrangement (34) in the external stator (30).

20. Synchronous machine according to one of the preceding claims, **characterized by** the machine being in the form of a torque motor.

## Revendications

1. Machine synchrone, en particulier un moteur à courant continu commutable électroniquement, avec un enroulement de stator multiphasé, de préférence un enroulement triphasé (U, V, W), conçu comme un enroulement à une seule dent, avec un enroulement sur chaque deuxième dent (32) et une dent secondaire (34) sans enroulement, située à chaque fois entre deux dents principales (32) avec enroulement, aussi bien les dents principales (32) que les dents secondaires (34) étant constituées d'un matériau magnétique doux avec une faible conductivité électrique, **caractérisée en ce que** les dents principales (32) présentent une section transversale essentiellement circulaire et portent un enroulement en forme d'anneau circulaire (U, V, W), et le diamètre (D) des dents principales (32) est plus petit que la longueur de fer (l_{Fe}) de l'empilage de tôles.

2. Machine synchrone selon la revendication 1, **caractérisée en ce que** les dents principales (32) forment, avec les dents secondaires (34), des rainures (36) en forme de cercle ou de secteur de cercle.

3. Machine synchrone selon la revendication 1 ou 2, **caractérisée en ce que** dans la direction périphérique de la machine, les dents secondaires (34) remplissent essentiellement entièrement l'espace entre deux dents principales (32) avec enroulement.

4. Machine synchrone selon l'une des revendications précédentes, **caractérisée en ce que** les dents secondaires (34) présentent une longueur axiale (l_{Fe}) plus grande que les dents principales (32).

5. Machine synchrone selon l'une des revendications précédentes, **caractérisée en ce que** les dents principales (32) et/ou les dents secondaires (34) possèdent des saillies de dent (44) formant des têtes de dent (42) sur l'espace d'air de la machine.

6. Machine synchrone selon la revendication 5, **caractérisée en ce que** les têtes de dent (42) des dents principales (32) et des dents secondaires (34) sont de la même taille dans la direction axiale et/ou dans la direction périphérique de la machine.

7. Machine synchrone selon l'une des revendications précédentes, **caractérisée en ce que** les dents principales (32) et/ou les dents secondaires (34) et/ou un cadre de support (48) sont constitués d'un matériau composite à base de poudre de fer.

8. Machine synchrone selon la revendication 7, **caractérisée en ce que** les dents principales (32) et/ou les dents secondaires (34) et/ou le cadre de support (48) sont constitués d'un matériau composite à base de poudre de fer combiné à une matière synthétique, ou d'un matériau SMC (Soft Magnetic Composite).

9. Machine synchrone selon l'une des revendications 1 à 6, **caractérisée en ce que** les dents principales (32) et/ou les dents secondaires (34) et/ou le cadre de support (48) sont stratifiés à partir de plusieurs tôles individuelles électriquement isolées.

10. Machine synchrone selon l'une des revendications précédentes, **caractérisée en ce que** les dents principales (32) et/ou les dents secondaires (34) et/ou les têtes de dent (42) et/ou le cadre (48) sont fabriquées au moins partiellement séparément, puis reliés entre eux.

11. Machine synchrone selon la revendication 10, **caractérisée en ce que** les dents principales (32) et/ou les dents secondaires (34) et/ou les têtes de dent (42) et/ou le cadre (48) sont collés (50) ensemble (Fig. 6a).

12. Machine synchrone selon la revendication 10, **caractérisée en ce que** les dents principales (32) et/ou les dents secondaires (34) et/ou les têtes de dent (42) et/ou le cadre (48) sont reliés entre eux par complémentarité de forme (Fig. 6b), de préférence par des queues d'aronde (52).

13. Machine synchrone selon la revendication 10, **caractérisée en ce que** les dents principales (32) et/ou les dents secondaires (34) et/ou le cadre (48) sont reliés entre eux selon un principe de voûte (Fig. 6c), de préférence selon un principe de voûte par complémentarité de forme (Fig. 6d).

14. Machine synchrone selon l'une des revendications précédentes, **caractérisée en ce que** les dents principales (32) et/ou les dents secondaires (34) et/ou les têtes de dent (42) et/ou le cadre (48) sont constitués de différents matériaux magnétiques doux, ou d'une combinaison de matériaux magnétiques doux.

15. Machine synchrone selon l'une des revendications précédentes, **caractérisée en ce que** les dents principales (32) sont formées par un bobinage de tôle, et les dents secondaires (34) sont constituées d'un matériau composite à base de poudre de fer, de préférence d'un matériau SMC.

16. Machine synchrone selon l'une des revendications 1 à 14, **caractérisée en ce que** les dents principales (32) sont constituées d'un matériau composite à base de poudre de fer, de préférence d'un matériau SMC, et les dents secondaires (34) le cadre (48) sont découpés dans des tôles et stratifiés.

17. Machine synchrone selon l'une des revendications 1 à 14, **caractérisée en ce que** les dents principales (32) et les dents secondaires (34) sont constituées d'un matériau composite à base de poudre de fer, de préférence d'un matériau SMC, tandis que les têtes de dent (42) et/ou le cadre (48) sont découpés dans des tôles et stratifiés.

18. Machine synchrone selon l'une des revendications précédentes, **caractérisée par** un ensemble d'excitation à aimant permanent (40).

19. Machine synchrone selon l'une des revendications précédentes, **caractérisée en ce que** la machine est conçue comme un rotor interne (38), avec un ensemble de dents secondaires (34) dans le stator (30) situé à l'extérieur.

20. Machine synchrone selon l'une des revendications précédentes, **caractérisée par** la formation en tant que moteur couple.
